Europäisches Patentamt

European Patent Office

Office européen des brevets

(11) Numéro de publication: **0 433 942 A1**

## (12) DEMANDE DE BREVET EUROPEEN

(21) Numéro de dépôt: 90124434.3

(22) Date de dépôt: **17.12.90**

(51) Int. Cl.5: **B67D  3/04**, F16K 11/087

(30) Priorité: **21.12.89 IT 8569789**

(43) Date de publication de la demande:
**26.06.91 Bulletin  91/26**

(84) Etats contractants désignés:
**AT BE CH DE DK ES FR GB GR IT LI LU NL SE**

(71) Demandeur: **VENETA ACCIAI s.r.l.**
**Via G. D'Annunzio, 96**
**I-31030 Biancade (Treviso)(IT)**

(72) Inventeur: **Trevisan, Giovanni**
**Via Ragusa 1a**
**I-31021 Mogliano Veneto (Treviso)(IT)**

(74) Mandataire: **Bettello, Luigi, Dott. Ing. et al**
**Via Col d'Echele, 25**
**I-36100 Vicenza(IT)**

(54) **Vanne à sphère pour produits alimentaires.**

(57)  On ménage sur un côté du boisseau sphérique (2) un trou (10) qui met en communication directe le liquide (vin) contenu à l'intérieur de la cavité (4) dudit corps (2) avec l'ouverture (5) communiquant avec le récipient fermé par la vanne, ce qui évite toute détérioration durant la période au cours de laquelle celle-ci reste fermée, détérioration susceptible d'affecter lors de l'ouverture les caractéristiques organoleptiques du liquide envisagé.

FIG. 1

EP 0 433 942 A1

La présente invention a trait aux vannes à boisseau sphérique pour la fermeture des récipients destinés à renfermer des produits alimentaires tels que du vin.

On sait que depuis un certain temps on emploie pour la fermeture de tels récipients des vannes à boisseau sphérique dont l'ouverture est commandée par un levier, lesdites vannes étant réalisées en métal, le plus souvent en acier, ou parfois également dans des matières plastiques spéciales.

Le boisseau qui en position d'ouverture permet le passage du liquide doit être prévu intérieurement creux si bien qu'à la position d'ouverture pour laquelle il met en liaison l'atmosphère interne du récipient avec l'ambiance extérieure à celui-ci, la position de fermeture étant obtenue en le faisant tourner manuellement au moyen du levier de commande précité, ledit boisseau reste rempli de liquide ; ce dernier a inévitablement tendance à croupir en s'acidifiant après un certain temps, ce qui a pour effet de conférer un goût mauvais même au liquide qui est contenu dans le récipient et qui par la suite doit s'écouler à travers la vanne.

C'est à cet inconvénient qu'entend remedier la présente invention, laquelle a pour objet la vanne à boisseau sphérique qui est définie à la revendication 1.

La caractéristique nouvelle réside en fait dans la prévision d'un trou pratiqué sur le côté du boisseau, lequel trou met en liaison, en position de fermeture, l'espace intérieur dudit boisseau avec le récipient fermé par la vanne.

Le liquide qui séjourne à l'intérieur du boisseau reste donc en contact direct et continu avec celui contenu dans le récipient, ce qui interdit tout contact avec l'atmosphère et évite radicalement toute acidification.

Lors de l'ouverture, le liquide contenu dans le boisseau sort en même temps que le liquide renfermé par le récipient, sans créer de problèmes particuliers et en conservant intacts le bon goût et la pureté du liquidecontenu dans le récipient.

L'invention va maintenant être décrite de manière plus détaillée avec l'aide du dessin annexé, dans lequel :

- la fig. 1 est une coupe de la vanne à la position fermée ;
- la fig. 2 représente la même vanne à la position ouverte.

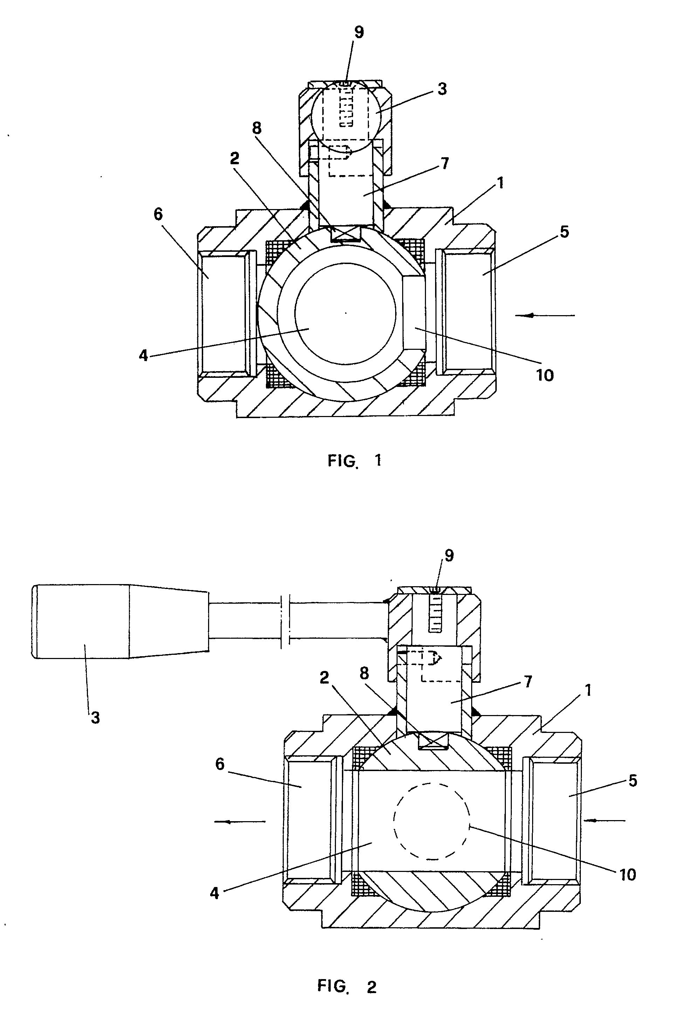

Comme on peut le relever sur le dessin, la vanne comprend un corps 1 de forme cylindrique, à l'intérieur duquel est montée un boisseau sphérique 2 manoeuvré manuellement à l'aide d'un levier 3, depuis la position fermée illustrée en fig. 1 jusqu'à la position ouverte suivant fig. 2 où lesdits levier 3 et boisseau 2 ont été représentés après rotation de 90°.

A la position ouverte, la cavité cylindrique 4 qui traverse le boisseau 2 se trouve en position alignée par rapport aux ouvertures d'entrée 5 et de sortie 6, tandis qu'à la position fermée (fig. 1) cette cavité intérieure 4 se trouve orientée perpendiculairement à l'ouverture d'entrée 5 comme à l'ouverture de sortie 6.

Les manoeuvres du boisseau 2 à l'ouverture et à la fermeture sont obtenues à l'aide de l'axe vertical 7 rendu solidaire du boisseau par l'intermédiaire d'un embout carré 8 prévu sur l'axe vertical 7 précité, lequel est à son tour rendu solidaire du levier de manoeuvre 3 à l'aide d'une vis à tête fraisée 9.

Suivant l'invention il est prévu un trou 10 pratiqué dans le corps du boisseau suivant un axe perpendiculaire à celui de la cavité 4, sur le côté dudit boisseau qui est tourné vers le récipient fermé par la vanne. Le liquide qui reste à l'intérieur du boisseau sphérique 2, par exemple le vin, reste donc, lorsque la vanne est fermée, toujours en contact direct avec le liquide renfermé par le récipient, si bien qu'il ne peut jamais venir en contact avec l'atmosphère extérieure.

Dans ces conditions, il ne peut absolument pas s'acidifier. Lors de l'ouverture de la vanne, il va sortir en même temps que le liquide renfermé par le récipient, en conservant toute son intégrité.

Bien évidemment, la vanne à boisseau sphérique suivant l'invention pourra être réalisée soit en acier spécial, soit en des matériaux plastiques de type approprié.

**Revendications**

1. Vanne pour produits alimentaires, propre à mettre en communication avec l'extérieur un récipient rempli d'un liquide susceptible de se détériorer facilement, comprenant un boisseau sphérique (2) percé d'une cavité transversale (4) qui moyennant manoeuvre dudit boisseau à l'aide d'un levier manuel (3), est amené de la position ouverte pour laquelle il est aligné avec les ouvertures d'entrée (5) et de sortie (6) jusqu'à la position fermée pour laquelle son axe propre est orienté perpendiculairement à celui des ouvertures précitées, caractérisée en ce qu'un trou (10) est pratiqué sur un côté du boisseau (2) de façon à mettre en contact direct le liquide contenu à l'intérieur de la cavité (4) avec le récipient fermé par la vanne, ledit liquide conservant donc intactes toutes ses caractéristiques organoleptiques et sortant de la sorte intact, lors de l'ouverture de la vanne, en même temps que le liquide qui est renfermé par le récipient.

**FIG. 1**

**FIG. 2**

**Office européen
des brevets**

Numéro de la demande

# RAPPORT DE RECHERCHE
# EUROPEENNE

## EP 90 12 4434

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-C-1 623 53   (M.F.C. MÜLLER)<br>* Revendication; figures 1,2 *<br>– – – – – | 1 | B 67 D 3/04<br>F 16 K 11/087 |
| | | | **DOMAINES TECHNIQUES RECHERCHES (Int. Cl.5)**<br><br>B 67 D |

Le présent rapport de recherche a été établi pour toutes les revendications

| Lieu de la recherche | Date d'achèvement de la recherche | Examinateur |
|---|---|---|
| La Haye | 25 mars 91 | VAN DEN BOSSCHE E.J. |